# EUROPEAN PATENT SPECIFICATION

(11) **EP 2 873 270 B1**
(45) Date of publication and mention of the grant of the patent: **04.12.2019**
(21) Application number: 12743253.2
(22) Date of filing: 13.07.2012
(51) Int. Cl.: H04W 36/00, H04W 24/10, H04W 36/30

(54) **NETWORK-CONTROLLED UE SWITCHING BETWEEN DIFFERENT TYPES OF RADIO NETWORKS**
NETZWERKGESTEUERTE UMSCHALTUNG VON BENUTZERGERÄTEN ZWISCHEN VERSCHIEDENEN ARTEN VON FUNKNETZEN
COMMUTATION D'ÉQUIPEMENT D'UTILISATEUR, COMMANDÉE PAR RÉSEAU, ENTRE DIFFÉRENTS TYPES DE RÉSEAUX DE RADIOCOMMUNICATION

(43) Date of publication of application: 20.05.2015
(73) Proprietor: Telefonaktiebolaget LM Ericsson (publ), 164 83 Stockholm (SE)
(72) Inventor: TOUATI, Samy, Pleasanton, California 94566 (US); VIKBERG, Jari, S-153 38 Järna (SE); MILDH, Gunnar, S-192 55 Sollentuna (SE); WESTERBERG, Erik, S-122 38 Enskede (SE)
(74) Representative: Brann AB
(86) International application number: PCT/SE2012/050834
(87) International publication number: WO 2014/011094

(56) References cited:
- WO-A1-2010/002317
- US-A1- 2009 163 206
- US-A1- 2010 323 698
- US-A1- 2011 134 882

## Description

### TECHNICAL FIELD

The technology relates to radio communications, and in particular, to coordinating user equipment (UE) communications across different types of radio networks.

### BACKGROUND

Heterogeneous radio access networks allow mobile radio communications operators to move traffic from a macro cellular radio network, where the capacity is sometimes limited, to cheaper shorter range wireless local area networks (WLANs) and femto/picocell networks connected over a variety of backhaul connections. Mobile radio connectivity thus may involve a mixture of radio, backhaul, and core network technologies, which require more complex inter-operator roaming agreements and emerging technologies.

3rd Generation Partnership Project (3GPP) establishes technical specifications for cellular radio communications. 3GPP also specifies mechanisms allowing non-3GPP accesses to connect to evolved packet core (EPC) networks at a packet data network-gateway (PDN-GW) using S2a, S2b, and S2c interfaces. These interfaces can be used by a 3GPP UE to attach to the PDN-GW (via wireline infrastructure) using Wi-Fi as access technology (Wi-Fi is the name given to the technology outlined in the IEEE 802.11 family of technical specifications). Prior to association to a Wi-Fi network, the UE must perform a network discovery and selection procedure. Both 3GPP and the Wi-Fi Alliance provide mechanisms that allow a UE to perform the discovery and selection procedures.

A 3GPP mechanism is the Access Network Discovery and Selection Function (ANDSF) defined by 3GPP. See 3GPP TS 23.402, the contents of which are incorporated herein by reference. An ANDSF either pushes to the UE or has the UE pull a set of rules that the UE uses to for scanning for Wi-Fi access based on the UE's location. Hot-Spot 2.0 (HS2.0) defined by the Wi-Fi Alliance, also incorporated herein by reference, is a network discovery and selection mechanism based on IEEE 802.11u. An HS2.0 objective is to allow a UE to seamlessly associate with a Wi-Fi access point based on a set of rules pre-installed on the UE. Hot-Spot 2.0 certification also provides a standardized mechanism for secure authentication and streamlined new user account creation at the hot-spot location. US 2011/134882 A1 describes handover of a terminal device from 3rd Generation Partnership Project, 3GPP network to a handover target network (non-3GPP network). WO 2010/002317 A1 describes automatically configuring a neighbor relations map in which information on neighboring cells of different access technology domains is maintained. However, it would be desirable to provide optimization in selection of a radio access point in a neighboring non-3GPP network and optimization in timing of handover to the selected radio access point.

The inventors recognized that 3GPP/Wi-Fi interworking mechanisms like ANDSF and Wi-Fi Alliance Hot-Spot 2.0 provide complementary mechanisms for integrated use of WLAN-based and cellular-based access networks. They also recognized that technology which leverages both types of mechanisms can provide increased integration, better performance, higher efficiency, better and more flexible services, etc.

### SUMMARY

A user equipment, UE, after establishing radio communications service with a first type of radio network, receives from the first type of radio network, information including parameters for scanning for radio access points in a second type of radio network different from the first type of radio network. The first type of radio network is 3rd Generation Partnership Project, 3GPP, cellular radio network and the second type of radio network is Wireless Local Area Network, WLAN. The scanning parameters include one or more rules indicating under what conditions the UE should scan the radio access points. The UE detects a situation which indicates that the UE should scan the radio access points in the second type of radio network. The UE, in response to the detected situation, scans the radio access points in the second type of radio network based on the received information, detects radio access point data, and reports the detected radio access point data to the first type of radio network. The UE receives a signal from the first type of radio network, instructing the UE to switch the radio communications service from the first type of radio network to a selected one of the radio access points in the second type of radio network. The selected one of the radio access points in the second type of radio network is selected based on the reported radio access point data. In response to the received signal, the UE switches radio communications service from the first type of radio network to the selected one of the radio access points in the second type of radio network.

Preferably, the switching of the radio communications service is a network-directed handover of the UE from the first type of radio network to the selected one of the radio access points in the second type of radio network. For example, a situation may be detected indicating that the UE should begin the scanning step, and in response, the UE scans radio access points in the second type of radio network based on the received information and detecting radio access point data. The situation may include a weakening of signal strength or a lessening of signal quality from the first type of radio network.

The scanning parameters, for example, may further indicate what specific information the UE should obtain from the scanning and report to the first type of radio network. Example rules define one or more of the following: a frequency of scanning by the UE, a threshold defining a minimum signal parameter to initiate the scanning, a battery level of the UE to initiate the scanning, an application type on the UE to initiate the scanning, data processing unit utilization level, an accelerometer value of the UE to initiate the scanning, a position of the UE to initiate the scanning, or a mobility state of the UE to initiate the scanning. Examples of the specific information include one or more of: a load of one or more radio access points in the second type of radio network, one or more supported roaming partners, a type of network security provided by the second type of radio network, a radio link performance associated with one or more radio access points in the second type of radio network, or a backhaul transport network performance of one or more radio access points in the second type of radio network.

Another aspect includes a user equipment, UE, for conducting radio communications, where the UE comprises a first radio circuitry configured to establish radio communications service with a first type of radio network and to receive from the first type of radio network information including parameters for scanning for radio access points in a second type of radio network different from the first type of radio network. The first type of radio network is 3rd Generation Partnership Project, 3GPP, cellular radio network and the second type of radio network is Wireless Local Area Network, WLAN. The scanning parameters include one or more rules indicating under what condition the UE should scan the radio access points. The UE further comprises a second radio circuitry configured to communicate with the second type of radio network and a control circuitry configured to detect a situation which indicates that the UE should scan the radio access points in the second type of radio network. In response to the detected situation, the control circuitry is configured to control the second radio circuitry to scan the radio access points in the second type of radio network based on the received information, detect the radio access point data, and to control the first radio circuitry to report the detected radio access point data to the first type of radio network. The first radio circuitry is configured to receive a signal from the first type of radio network, instructing the UE to switch the radio communications service from the first type of radio network to a selected one of the radio access points in the second type of radio network. The selected one of the radio access points in the second type of radio network is selected based on the reported radio access point data. In response to the received signal, the control circuitry is configured to switch the radio communications service from the first type of radio network to the selected one of the radio access points in the second type of radio network. In a more detailed non-limiting example, the 3GPP cellular network includes an Access Network Discovery and Selection Function, ANDSF, which either pushes to the UE or has the UE pull a set of rules to be used by the UE to start scanning for Wi-Fi access, and wherein the specific information includes IEEE 802.1 lu PassPoint Access Network Query Protocol, ANQP, elements.

Another aspect includes a network node in the first type of radio network in which radio communications service is established with the first type of radio network by a user equipment, UE. The network node sends to the UE, information including parameters indicating how the UE is to scan for radio access points in a second type of radio network different from the first type of radio network. The first type of radio network is 3rd Generation Partnership Project, 3GPP, cellular radio network and the second type of radio network is Wireless Local Area Network, WLAN. The information includes specific conditions at which the UE should begin scanning the radio access points As a result, the network node receives from the UE radio access point data, detected by the UE scanning radio access points in the second type of radio network in accordance with the sent information. The network node sends a signal to the UE instructing the UE to switch radio communications service from the first type of radio network to the selected one of the access points in the second type of radio network based on the received radio access point data from the UE. Another aspect includes a network node in a first type of radio network in which radio communications service is established with the first type of radio network by a user equipment, UE, where the network node comprises a radio network interface configured to send or to have sent to the UE information including parameters indicating how the UE is to scan for radio access points in a second type of radio network different from the first type of radio network and to receive from the UE radio access point data, detected by the UE scanning radio access points in the second type of radio network in accordance with the sent information. The first type of radio network is 3rd Generation Partnership Project, 3GPP, cellular radio network and the second type of radio network is Wireless Local Area Network, WLAN. The information includes specific conditions at which the UE should begin scanning the radio access points. The network node further comprises a control circuitry configured to generate a signal instructing the UE to switch the radio communications service from the first type of radio network to a selected one of the radio access points in the second type of radio network. The selected one of the radio access points in the second type of radio network is selected based on the received radio access point data from the UE, where the control circuitry is configured to control the radio network interface to send the signal.

### BRIEF DESCRIPTION OF THE DRAWINGS

Figure 1 illustrates an example scenario where UEs may communicate with different types of radio networks;
Figure 2 is a flowchart illustrating non-limiting example steps performed by a UE in accordance with an example embodiment;
Figure 3 is a flowchart illustrating non-limiting example steps performed by a network node in accordance with an example embodiment;
Figure 4 illustrates a non-limiting example scenario where a UE communicates with a cellular radio network and a WLAN network;
Figure 5 is a non-limiting example function block diagram of a UE;
Figure 6 is a non-limiting example function block diagram of a network node;
Figure 7 is a non-limiting example signaling diagram; and
Figure 8 is a non-limiting example of a multi-access handover.

### DETAILED DESCRIPTION

The following description sets forth specific details, such as particular embodiments for purposes of explanation and not limitation. But it will be appreciated by one skilled in the art that other embodiments may be employed apart from these specific details. In some instances, detailed descriptions of well known methods, nodes, interfaces, circuits, and devices are omitted so as not to obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, the technology can additionally be embodied within any form of non-transitory, computer-readable memory, such as solid-state memory, magnetic disk, or optical disk containing an appropriate set of computer instructions that would cause one or more processors to carry out the techniques described herein.

Thus, for example, it will be appreciated by those skilled in the art that block diagrams herein can represent conceptual views of illustrative circuitry or other functional units embodying the principles of the technology. Similarly, it will be appreciated that any flow charts, state transition diagrams, pseudocode, and the like represent various processes which may be implemented by computer program instructions that may be stored in a non-transitory, computer-readable storage medium and which when executed by one or more computers or processors cause the processes to be performed, whether or not such computer(s) or processor(s) is(are) explicitly shown.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

The functions of the various elements including functional blocks, including but not limited to those labeled or described as a computer, processor, or controller, may be provided through the use of hardware such as circuit hardware and/or hardware capable of executing software in the form of coded instructions stored on non-transitory, computer-readable medium. Thus, such functions and illustrated functional blocks are to be understood as being either hardware-implemented and/or computer-implemented, and thus machine-implemented.

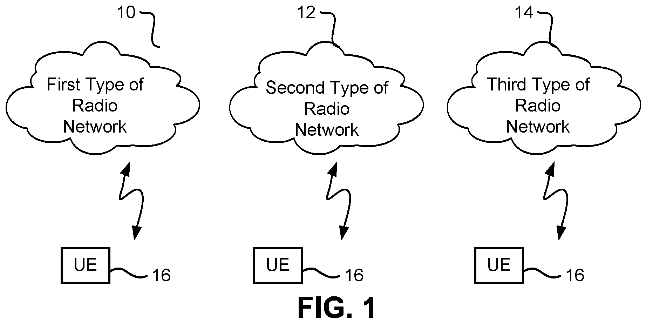

Figure 1 shows an example situation where UEs 16 may potentially obtain radio access and communications services via multiple different types of radio access networks that allow UEs to communicate with other networks such as the Internet, the PSTN, private networks, etc. A first type of radio network 10, a second type of radio network 12, and a third type of radio network 14 are shown. Examples of different types of radio networks include cellular networks, public WLANs, private WLANs (business, home, etc.), etc. Other types of radio access networks are included, e.g., WiMAX. The technology described integrates multiple technical features from different types of radio access networks, and as a result, leverages multiple radio access technologies to provide a more integration, better performance, higher efficiency, better and more flexible services, among other advantages.

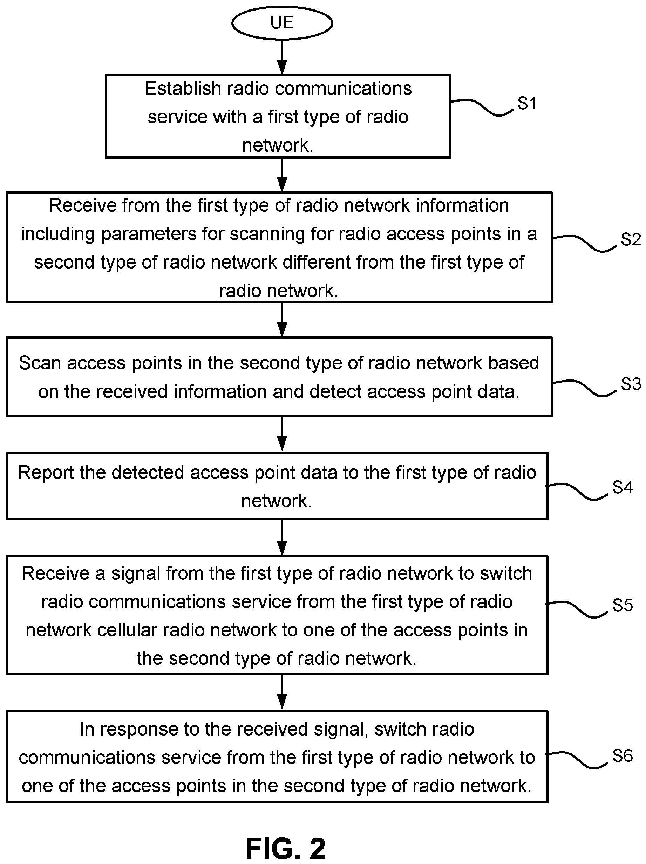

Figure 2 is a flowchart illustrating non-limiting example steps performed by a UE in accordance with an example embodiment. In step S1, the UE establishes (or has already established) radio communications service with a first type of radio network. At some point, the UE receives from the first type of radio network information including parameters and trigger points for scanning for radio access points in a second type of radio network different from the first type of radio network (step S2). An access point (AP) is any radio node that provides access to a radio access network. The UE later scans access points in the second type of radio network based on the received information and detects access point data (step S3). The UE reports the detected access point data to the first type of radio network (step S4) and receives a signal from the first type of radio network to switch radio communications service from the first type of radio network cellular radio network to one of the access points in the second type of radio network (step S5). The signal to switch from the first type of radio network to one of the access points in the second type of radio network occurs when a radio condition associated with the access with the first type of network warrants the switch such as when the signal strength received from the first type of radio network is decreasing or the load of the first type of radio network is increasing. In response to the received signal, the UE switches radio communications service from the first type of radio network to one of the access points in the second type of radio network (step S6).

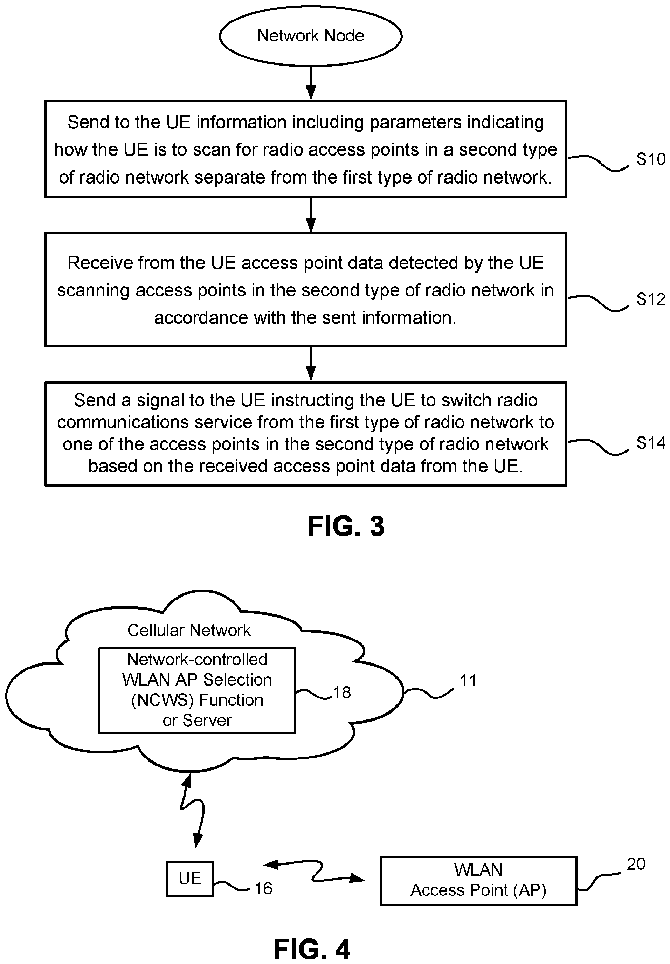

Figure 3 is a flowchart illustrating non-limiting example steps performed by a network node in accordance with an example embodiment in cooperation with the UE's operation outlined in Figure 2. The network node may be for example a base station node, a base station control node, a core network node, a standalone server node, or other type of network node. The network node initially sends to the UE information including parameters indicating how the UE is to scan for radio access points in a second type of radio network separate from the first type of radio network (step S10). The network node receives from the UE access point data detected by the UE scanning access points in the second type of radio network in accordance with the sent information (step S12). The network node sends a signal to the UE instructing the UE to switch radio communications service from the first type of radio network to one of the access points in the second type of radio network based on the received access point data from the UE (step S14).

Figure 4 illustrates a non-limiting example scenario where a UE 16 communicates with both a cellular radio network 11 and a WLAN network 20 which are examples of two different types of radio access networks. Examples of cellular radio networks include 3GPP networks like GERAN, UTRAN, HSPA and e-UTRAN/LTE, and an example of a WLAN network is a Wi-Fi network in the IEEE 802.11 series and WiMAX based on 802.16. The WLAN network 20 includes at least one and typically multiple access points (APs). The cellular radio network 11 includes a network-controlled WLAN AP selection (NCWS) function 18 that may be implemented as part of an existing network node in the cellular network 11 or as a part of a new node or computer server associated with the cellular radio network 11.

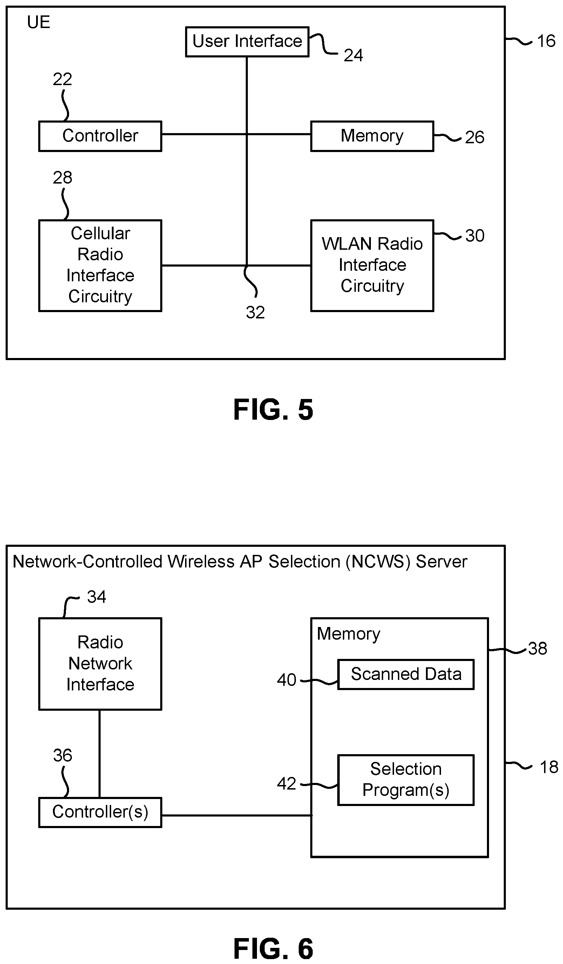

Figure 5 is a non-limiting example function block diagram of a UE for implementing the steps in Figure 2 as well as for implementing UE procedures outlined in the detailed non-limiting examples described below. The UE 16 includes a user interface 24, controller 22, memory 26, first radio interface circuitry 28, and second radio interface circuitry 30 all connected by one or more data communication busses 32. The controller 22 may be one or more data processors controlled in whole or in part by one or more computer programs stored in one or more memories 26 for controlling/implementing the UE functions described above in Figure 2 and below. The memory also stores data such as specific parameters for scanning for radio access points received from a radio network or otherwise and rules for selecting an access point when a handover is necessary or desired. The UE may scan access points for example when the UE detects sufficient weakening of signal strength or lessening of signal quality from the cellular radio network, e.g., as compared to a threshold. The first radio interface circuitry 28 and second radio interface circuitry 30 include radio transceiving and baseband processing functionality required for radio communication with a first type of radio network, e.g., a cellular network, and a second type of radio network, e.g., a WLAN network. Although the first radio interface circuitry 28 and second radio interface circuitry 30 are show as separate blocks, they may be implemented together or in other suitable configurations. Some or all of the functionality in the UE may be implemented using hardware such as FPGAs, ASICs, discrete components, etc.

Figure 6 is a non-limiting example function block diagram of a network node 18 for implementing the steps in Figure 3 as well as for implementing network node procedures outlined for detailed non-limiting examples described below. The network node 18 includes a radio network interface 34, one or more controllers 36, and one or more memories 38 connected by one or more busses. The controller 36 may be one or more data processors controlled in part by one or more computer programs stored in one or more memories 38 for controlling/implementing the network node functions described above in Figure 3 and below. The one or more memories 38 store access point selection program instructions 42 and scan data 40 such as scanning rules sent to UEs and scanned information received from one or more UEs 16. As mentioned above for the UE 16, some or all of the functionality in the network node 18 may be implemented using hardware such as FPGAs, ASICs, discrete components, etc.

For the UE 16 and network node 18, scanning parameters may include one or more rules indicating under what condition(s) the UE should scan access points and what specific information the UE should obtain from the scanning and then report to the cellular radio network. For example, they may define one or more of the following: a frequency of scanning by the UE, a threshold defining a minimum signal parameter to initiate the scanning, a UE battery level to initiate the scanning, an application type on the UE to initiate the scanning, an UE accelerometer value to initiate the scanning, a UE position to initiate the scanning, or a mobility state of the UE to initiate the scanning. Examples of information the UE may obtain during scanning and report to the network node may include one or more of: a load of one or more access points in the WLAN, one or more supported roaming partners, a type of network security provided by the WLAN, a radio link performance associated with one or more access points in the WLAN, or a backhaul transport network performance of one or more access points in the WLAN.

The following describes non-limiting example embodiments in a specific context where a first type of radio network is a 3GPP cellular radio network and a second type of radio network is a WLAN network corresponding to a Wi-Fi network based on one or more IEEE 802.11 protocols.

In this example context, the inventors determined that 3GPP's existing Access Network Discovery and Selection Function (ANDSF) is not sufficiently flexible or comprehensive because the existing ANDSF rules only allow UEs to associate with a Wi-Fi access point based on a list of service set identifiers (SSID), (each SSID is a MAC address for a corresponding Wi-Fi access point), available for the UE in a particular geographical location. For example, no selection rules are pushed to the UE to allow the UE to select a Wi-Fi Access Point network based on other criteria such as a load of the access point, supported roaming partners, the type of IP network security provided, radio link performance, and/or backhaul transport network performance of the access point. But the inventors recognized that Hot-Spot 2.0 certification provides access to these additional types data and that the discovery and selection mechanisms in Hot-Spot 2.0 are based on the collected data evaluation during a discovery phase prior to associating to any Access Point.

But there are also shortcomings in the HS2.0 selection mechanism. For example, it is based on a pre-provisioned set of rules stored in the UE that can be overridden by the user from a connection manager. Another shortcoming is the selection mechanism may only be enabled when the UE, or the user, activates a Wi-Fi interface to start scanning for a homogeneous extended SSID (HESSID). These shortcomings limit the effectiveness of HS2.0 selection results because the pre-provisioned rules are not network-managed or dynamic. The rules are network-managed so as to allow the network to steer the UE regarding radio access network to use. Accordingly, the network needs an overall view of different radio conditions across the multiple radio access technologies deployed. The network directing the steering allows optimization in directed the UE to an Access Point and transfers ome context data from the source access to the target access reducing the handover time. The rules are also dynamic to account for changing radio conditions and network conditions when steering the UE to the most optimal access when required. Therefore threshold for the different rules varies over time depending the variable radio and network conditions.

On the other hand, the ANDSF does support a network-controlled architecture to deliver network-managed policies, which can be refreshed and revised by the network as desired. Those policies may also be personalized based on the knowledge of the user if required. Accordingly, the technology in this example embodiment combines or integrates capabilities of HS2.0 and the ANDSF. For example, the ANDSF is augmented using HS2.0 functionality to include rules that provide a Wi-Fi network selection procedure based on data obtained from access points prior to UE authentication with a selected access point. The augmented rules may also be used as part of Wi-Fi's Inter-System Mobility Policies (ISMP) and Inter-System Routing Policies (ISRP). As a result, the 3GPP network can direct a UE switch, e.g., a handover, from 3GPP access to Wi-Fi access taking into account a variety of HS2.0 parameters, which is not possible with currently-defined mechanisms for network discovery and selection.

In this example context, the network node 18 is a 3GPP node or server includes a network-controlled Wi-Fi AP selection (NCWS) function corresponding to an augmented Access Network Discovery and Selection Function (ANDSF). The NCWS function may also reside in different parts of the 3GPP network such as part of the RAN, the core network (CN), or a service network. The NCWS either pushes to the UE or has the UE pull information (e.g., one or more sets of rules) to be used by the UE in scanning for Wi-Fi access UE to collect HS2.0 type information on different Wi-Fi APs. Based on this information from the network node, the UE may place its Wi-Fi radio interface circuitry into an HS2.0 scanning mode to allow the UE to perform a network discovery phase and probe APs in its vicinity using HS2.0 mechanisms. In this mode, the UE preferably does not associate to any Wi-Fi access point and hence stays connected to the 3GPP network. In this way, the 3GPP network controls handover to a particular Wi-Fi AP using a comprehensive platform of information to optimize the timing of the handover and the AP selected. As a result, this technology provides overall better end-user performance because the network type switch and AP selection take into consideration a variety of parameters like the load situation both in the source and target cells, radio conditions, ownership of the target Wi-Fi access point, and/or other factors.

As mentioned above, two types of rules may be pushed from the "network controlled Wi-Fi Access selection" function in the 3GPP network to the UE. One set of rules includes scanning conditions examples of which include one or more of the following:
1-a frequency of scanning operation. In between two scans the Wi-Fi radio can be turned off to save battery in the UE.
2-one or more thresholds defining the minimum signal strength of the 3GPP RAN to trigger a start of a Wi-Fi AP scan.
3-scanning based on battery level on the UE.
4-scanning based on the application type on the UE.
5-scanning based on data from the accelerometer in the UE if available.
6-scanning based on UE position
7-scanning based on the UE mobility (e.g. moving, stationary)
Other rules based on other parameters may also be used. Different rules may be used in different scenarios and implementations.

Another set of rules includes specific HS2.0 parameters that UEs should obtain from discovered access points referred to below as Wi-Fi scan data rules. The UE may use, in an example embodiment, 802.1 lu-based signaling to perform these queries on the different access points with SSIDs in one or more HESSIDs. These queried parameters may either all be reported back to the 3GPP network or a partial list may be reported back. Examples of HS2.0 parameters include Basic Service Set, BSS, Load of the Access Point, Received Signal Strength Indicator, RSSI, at the UE, Wide Area Network, WAN, Metrics, Operating Class, and Access Network Type.

The 3GPP RAN may send an access selection command or handover request to a UE ordering the UE to access a specific Wi-Fi access point selected by the 3GPP network node because, e.g., the AP fulfills certain criteria such as a load lower than a specified value, a signal strength stronger than a specific value, etc. The access point selection command to the UE may contain information outlining one or more conditions when the UE should connect to the selected Wi-Fi access point.

The associated signaling load on the UE and on the network may be controlled by limiting how often such rules, parameters, and/or conditions are updated. For example, only delta/difference information need be sent for updates. Similarly UE scan results may be reported to the network in terms of deltas from previous reports to reduce the signaling load. Triggering of reports may be periodic or event or condition-triggered or both. The scanning condition rules and reporting rules may be communicated to the UE either as broadcast information, as dedicated signaling, as preconfigured data, or some combination of these methods.

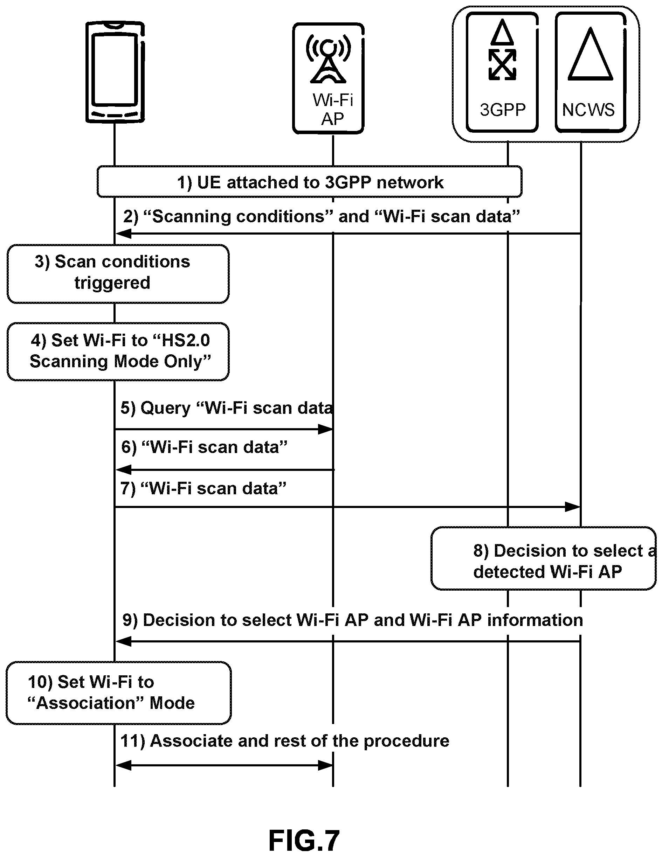

Figure 7 is a non-limiting example signaling diagram for a sequence of events that take place prior to a UE handover from the 3GPP network to a Wi-Fi AP. In 1), the UE is attached to the 3GPP network. At 2), the UE is pushed/receives information, e.g., a set of rules, pertaining to the Wi-Fi access networks from the network controlled Wi-Fi Access selection function in the 3GPP RAN. These rules include scanning condition rules and the Wi-Fi scan data that the UE is to report back to the 3GPP network. 3) the UE detects low signal strength from the 3GPP RAN that matches one of the rules indicating that the UE should start scanning for Wi-Fi access points. The signal strength level condition may be set so that it is always met, i.e., it is set very high so that the UE always detects the 3GPP network signal below the threshold rule to scan for WiFi APs. This may be useful in offload scenarios when the signal strength of the 3GPP cell is not an important handover decision factor. The UE may also scan Wi-Fi APs when the signal strength from the 3GPP RAN is strong. In some situations, scanning may be triggered by the network-controlled Wi-Fi Access selection function sending an explicit scan command to the UE. 4) The UE powers on its Wi-Fi interface and starts scanning, but does not associate to any of the scanned Access Points as no decision has been taken by the network to perform handover. 5) Scanning by the UE begins, and the UE queries HS2.0 data from different APs in the HESSID listed in the Wi-Fi scan data. 6) The UE receives queried data from scanned access points, and 7) reports the collected data to the "network controlled Wi-Fi Access selection" function in the 3GPP network according to the Wi-Fi scan data rules.

This reporting and the provisioning of the set of rules to the UE may take place on different levels. For example, it may be part of radio resource control (RRC) or non-access stratum (NAS) signaling or as part of an IP-level communication in the user plane of the 3GPP network.

At point 8), the 3GPP network node determines that a handover is desired or required and initiates at 9) the handover procedure by instructing the UE to associate to a neighboring access point, e.g., the MAC address of the AP is provided to the UE. The handover and selected AP information are based on the previously reported data by the UE. At 10), the UE controller places the Wi-Fi radio interface circuitry in "associate mode," which is the regular mode for Wi-Fi radio communications. At 11), the UE selects the instructed Wi-Fi frequency and channel based on the received handover information. The UE starts the association and authentication procedure with the selected access point. At this point in time, there is no need to perform discovery as defined by HS2.0, as the network has already collected the discovery information at step 7. HS2.0 selection takes place where the UE associates with the network selected AP and starts an authentication procedure.

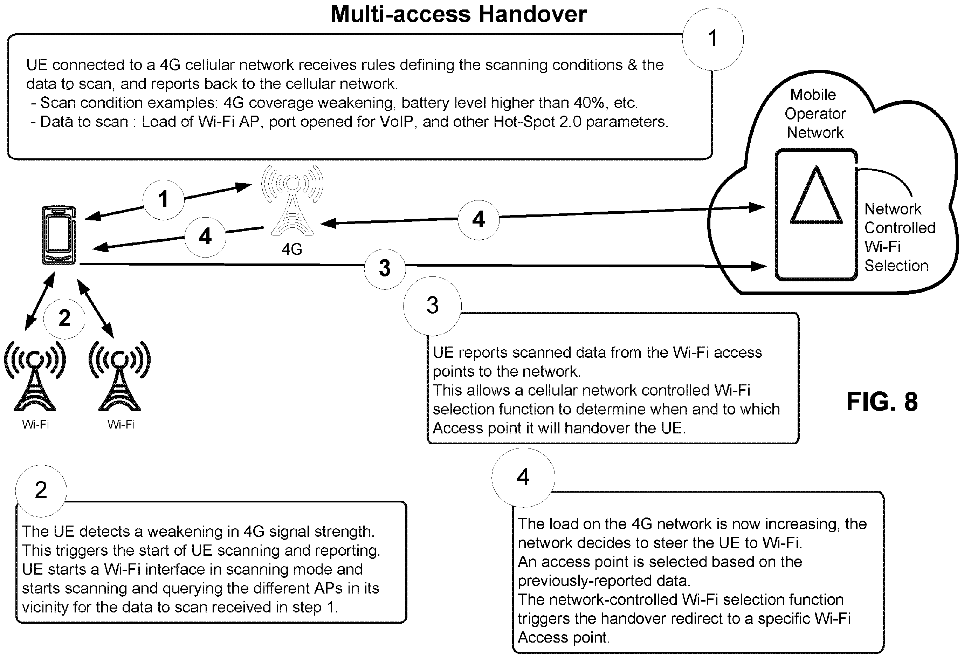

Figure 8 is a non-limiting example of a multi-access handover. At time (1), the UE is connected to a 4G LTE cellular network. The UE receives from the cellular network rules defining the scanning conditions and specific data to scan and report back to the network. Example start scanning conditions might include weakening of 4G coverage or a UE battery level is higher than 40% (higher battery level allows more flexibility in starting scans and potentially handing over given that handover consumes more energy because of the signaling involved). Example data to scan includes the current load of the Wi-Fi AP, whether the AP has a port open for voice over IP (VoIP), and other Hot-Spot 2.0 parameters. At time (2), the UE notices a weakening in 4G signal strength which triggers start of AP scanning and reporting. The UE puts its Wi-Fi interface in scanning mode and starts scanning and querying the different APs in its vicinity for the scan data identified in step (1). At time (3), the scanned data the UE obtained from the scanned Wi-Fi access points is reported to the 3GPP network node which uses this information to perform a network-controlled Wi-Fi AP selection function that determines when to handover the UE and to which specific access point. At time (4), the load on the 4G network increases to a point where the 3GPP network node decides to steer the terminal to the Wi-Fi network. A particular access point is selected based on the previously-reported data, and the network controlled Wi-Fi selection function triggers the handover redirect to a specific Wi-Fi access point.

There are significant advantages to a network-controlled handover as compared for example to a UE-directed handover or a default Wi-Fi handover. For example, the 3GPP cellular network may be loaded, but still able to handle some type of traffic such as web traffic or chat applications. In that case, a video streaming application may be handled via the Wi-Fi access but the web and chat remain with the cellular network. Another advantage of network-controlled handover to Wi-Fi is the ability to trigger a handover to Wi-Fi when the load of the Wi-Fi network is warrant that handover. Absent this technology, the UE by default associates with Wi-Fi if it is available and provides a suitable signal strength. In this way, less desirable handovers from a cellular network to a Wi-Fi network may be reduced. Network-directed handovers lead to better utilization of radio resources (spectrum efficiency) and better end user performance because handover decisions are taken with knowledge of the full network load and radio conditions of all mobiles in the network rather than taken with the limited knowledge a UE has about its own radio situation and load situation of the target Wi-Fi access point. The technology also improves integration between cellular and other types of networks which is necessary for deploying other networks, like Wi-Fi networks, in a high-density manner. Another advantage is the technology saves battery in the UE by enabling the network to inform the UE when the Wi-Fi radio circuitry may be powered-off in between scanning periods.

Although the description above contains many specifics, these should not be construed as limiting the scope of the claims but as merely providing illustrations of example embodiments. It will be appreciated that the technology claimed fully encompasses other embodiments which may become apparent to those skilled in the art, and that the scope of the claims is accordingly not to be limited. Reference to an element in the singular is not intended to mean "one and only one" unless explicitly so stated but rather "one or more."

No element, block, or instruction used in the present application should be construed as critical or essential to the implementations described herein unless explicitly described as such. Further, the phrase "based on" is intended to mean "based, at least in part, on" unless explicitly stated otherwise.

## Claims

1. A method performed by a user equipment, UE, (16) for conducting radio communications, the method comprising:
establishing (S1) radio communications service with a first type of radio network (10);
receiving (S2), from the first type of radio network (10), information including parameters for scanning for radio access points in a second type of radio network (12) different from the first type of radio network (10), wherein the first type of radio network (10) is 3rd Generation Partnership Project, 3GPP, cellular radio network, wherein the second type of radio network (12) is Wireless Local Area Network, WLAN, and wherein the scanning parameters include one or more rules indicating under what conditions the UE should scan the radio access points;
detecting a situation which indicates that the UE (16) should scan the radio access points in the second type of radio network (12);
in response to the detected situation, scanning (S3) the radio access points in the second type of radio network (12) based on the received information and detecting (S3) radio access point data;
reporting (S4) the detected radio access point data to the first type of radio network (10);
receiving (S5) a signal from the first type of radio network (10), instructing the UE (16) to switch the radio communications service from the first type of radio network (10) to a selected one of the radio access points in the second type of radio network (12), wherein the selected one of the radio access points in the second type of radio network (12) is selected based on the reported radio access point data; and
in response (S6) to the received signal, switching the radio communications service from the first type of radio network (10) to the selected one of the radio access points in the second type of radio network (12).

2. The method in claim 1, wherein the situation includes a weakening of signal strength or a lessening of signal quality from the first type of radio network (10).

3. The method in any of the above claims, wherein the switching of the radio communications service is a network-directed handover of the UE (16) from the first type of radio network (10) to the selected one of the radio access points in the second type of radio network (12).

4. The method in any of the above claims, wherein the scanning parameters further indicate what specific information the UE should obtain from the scanning and report to the first type of radio network (10).

5. The method in claim 4, wherein the one or more rules define one or more of the following: a frequency of scanning by the UE (16), a threshold defining a minimum signal parameter to initiate the scanning, a battery level of the UE (16) to initiate the scanning, an application type on the UE (16) to initiate the scanning, data processing unit utilization level, an accelerometer value of the UE (16) to initiate the scanning, a position of the UE (16) to initiate the scanning, or a mobility state of the UE (16) to initiate the scanning.

6. The method in claim 5, wherein the specific information includes one or more of: a load of one or more radio access points in the second type of radio network (12), one or more supported roaming partners, a type of network security provided by the second type of radio network (12), a radio link performance associated with the one or more radio access points in the second type of radio network (12), or a backhaul transport network performance of the one or more radio access points in the second type of radio network (12).

7. A method performed by a network node (18) in a first type of radio network (10) in which radio communications service is established with the first type of radio network (10) by a user equipment, UE, (16), the method comprising:
sending (S10) to the UE (16), information including parameters indicating how the UE (16) is to scan for radio access points in a second type of radio network (12) different from the first type of radio network (10), wherein the first type of radio network (10) is 3rd Generation Partnership Project, 3GPP, cellular radio network, wherein the second type of radio network (12) is Wireless Local Area Network, WLAN, and wherein the information includes specific conditions at which the UE (16) should begin scanning the radio access points;
receiving (S12) from the UE (16), radio access point data, detected by the UE (16) scanning the radio access points in the second type of radio network (12) in accordance with the sent information; and
sending (S14) a signal to the UE (16), instructing the UE (16) to switch the radio communications service from the first type of radio network (10) to a selected one of the radio access points in the second type of radio network (12), wherein the selected one of the radio access points in the second type of radio network (12) is selected based on the received radio access point data from the UE (16).

8. The method in claim 7, wherein the switch is a network-controlled handover of the UE (16) from the first type of radio network (10) to the selected one of the radio access points in the second type of radio network (12).

9. The method in claim 7, wherein the specific conditions include a weakening of signal strength or a lessening of signal quality from the first type of radio network.

10. The method in claim 9, wherein the specific conditions at which the UE (16) should begin scanning the radio access points in the second type of radio network (12) include one or more rules that define one or more of the following: a frequency of scanning by the UE (16), a threshold defining a minimum signal parameter to initiate the scanning, a battery level of the UE (16) to initiate the scanning, an application type on the UE (16) to initiate the scanning, data processing unit utilization level, an accelerometer value of the UE (16) to initiate the scanning, a position of the UE (16) to initiate the scanning, or a mobility state of the UE (16) to initiate the scanning, and wherein the received UE radio access point data includes one or more of: a load of one or more radio access points in the second type of radio network (12), one or more supported roaming partners, a type of network security provided by the second type of radio network (12), a radio link performance associated with the one or more radio access points in the second type of radio network (12), or a backhaul transport network performance of the one or more radio access points in the second type of radio network (12).

11. A user equipment, UE, (16) for conducting radio communications, the UE (16) comprising:
a first radio circuitry (28) configured to establish radio communications service with a first type of radio network (10) and to receive from the first type of radio network (10) information including parameters for scanning for radio access points in a second type of radio network (12) different from the first type of radio network (10), wherein the first type of radio network (10) is 3rd Generation Partnership Project, 3GPP, cellular radio network, wherein the second type of radio network (12) is Wireless Local Area Network, WLAN, and wherein the scanning parameters include one or more rules indicating under what condition the UE (16) should scan the radio access points;
a second radio circuitry (30) configured to communicate with the second type of radio network;
a control circuitry (22) configured to detect a situation which indicates that the UE (16) should scan the radio access points in the second type of radio network (12), and in response to the detected situation, the control circuitry (22) is configured to control the second radio circuitry (30) to scan the radio access points in the second type of radio network (12) based on the received information, detect the radio access point data, and to control the first radio circuitry (28) to report the detected radio access point data to the first type of radio network (10),
wherein the first radio circuitry (28) is configured to receive a signal from the first type of radio network (10), instructing the UE (16) to switch the radio communications service from the first type of radio network (10) to a selected one of the radio access points in the second type of radio network (12), wherein the selected one of the radio access points in the second type of radio network (12) is selected based on the reported radio access point data, and in response to the received signal, the control circuitry (22) is configured to switch the radio communications service from the first type of radio network (10) to the selected one of the radio access points in the second type of radio network (12).

12. The UE (16) in claim 11, wherein the scanning parameters further indicate what specific information the UE (16) should obtain from the scanning and report to the first type of radio network (10),
wherein the one or more rules define one or more of the following: a frequency of scanning by the UE (16), a threshold defining a minimum signal parameter to initiate the scanning, a battery level of the UE (16) to initiate the scanning, an application type on the UE (16) to initiate the scanning, data processing unit utilization level, an accelerometer value of the UE (16) to initiate the scanning, a position of the UE (16) to initiate the scanning, or a mobility state of the UE (16) to initiate the scanning, and
wherein the specific information includes one or more of: a load of one or more radio access points in the second type of radio network (12), one or more supported roaming partners, a type of network security provided by the second type of radio network (12), a radio link performance associated with the one or more radio access points in the second type of radio network (12), or a backhaul transport network performance of the one or more radio access points in the second type of radio network (12).

13. A network node (18) of a first type of radio network (10) in which radio communications service is established with the first type of radio network (10) by a user equipment, UE, (16), the network node (18) comprising:
a radio network interface (34) configured to send or to have sent to the UE (16) information including parameters indicating how the UE (16) is to scan for radio access points in a second type of radio network (12) different from the first type of radio network (10) and to receive from the UE (16) radio access point data, detected by the UE (16) scanning the radio access points in the second type of radio network (12) in accordance with the sent information, wherein the first type of radio network (10) is 3rd Generation Partnership Project, 3GPP, cellular radio network, wherein the second type of radio network (12) is Wireless Local Area Network, WLAN, and wherein the information includes specific conditions at which the UE (16) should begin scanning the radio access points; and
a control circuitry (36) configured to generate a signal instructing the UE (16) to switch the radio communications service from the first type of radio network (10) to a selected one of the radio access points in the second type of radio network (12), wherein the selected one of the radio access points in the second type of radio network (12) is selected based on the received radio access point data from the UE (16), wherein the control circuitry (36) is configured to control the radio network interface (34) to send the signal.

14. The network node (18) in claim 13, wherein the specific conditions at which the UE (16) should begin scanning the radio access points in the second type of radio network (12) including one or more of the following: a weakening of signal strength or a lessening of signal quality from the first type of radio network (10), a frequency of scanning by the UE (16), a threshold defining a minimum signal parameter to initiate the scanning, a battery level of the UE (16) to initiate the scanning, an application type on the UE (16) to initiate the scanning, data processing unit utilization level, an accelerometer value of the UE (16) to initiate the scanning, a position of the UE (16) to initiate the scanning, or a mobility state of the UE (16) to initiate the scanning.

15. The network node (18) in claim 14, wherein the received UE radio access point data includes one or more of: a load of one or more radio access points in the second type of radio network (12), one or more supported roaming partners, a type of network security provided by the second type of radio network (12), a radio link performance associated with the one or more radio access points in the second type of radio network (12), or a backhaul transport network performance of the one or more radio access points in the second type of radio network (12).

## Patentansprüche

1. Verfahren, das durch ein Benutzergerät (UE) (16) zum Durchführen von Funkkommunikation ausgeführt wird, wobei das Verfahren Folgendes umfasst:
Einrichten (S1) eines Funkkommunikationsdienstes mit einem Funknetz erster Art (10);
Empfangen (S2), von dem Funknetz erster Art (10), von Informationen, die Parameter zum Scannen nach Funkzugangspunkten in einem Funknetz (12) zweiter Art beinhalten, das sich von dem Funknetz erster Art (10) unterscheidet, wobei das Funknetz erster Art (10) ein zelluläres Funknetz des Partnerschaftsprojekts der dritten Generation (3GPP) ist, wobei das Funknetz zweiter Art (12) ein drahtloses lokales Netzwerk (WLAN) ist und wobei die Scanparameter eine oder mehrere Regeln beinhalten, unter welchen Bedingungen das UE die Funkzugangspunkte scannen sollte;
Erkennen einer Situation, die angibt, dass das UE (16) die Funkzugangspunkte in dem Funknetz zweiter Art (12) scannen sollte;
als Reaktion auf die erkannte Situation, Scannen (S3) der Funkzugangspunkte in dem Funknetz zweiter Art (12) auf Grundlage der empfangenen Informationen und Erkennen (S3) von Funkzugangspunktdaten;
Melden (S4) der erkannten Funkzugangspunktdaten an das Funknetz erster Art (10);
Empfangen (S5) eines Signals von dem Funknetz erster Art (10), das das UE (16) anweist, den Funkkommunikationsdienst von dem Funknetz erster Art (10) zu einem ausgewählten der Funkzugangspunkte in dem Funknetz zweiter Art (12) zu wechseln, wobei der ausgewählte der Funkzugangspunkte in dem Funknetz zweiter Art (12) auf Grundlage der gemeldeten Funkzugangspunktdaten ausgewählt wird; und
als Reaktion (S6) auf das empfangene Signal, Wechseln des Funkkommunikationsdienstes von dem Funknetz erster Art (10) zu dem ausgewählten der Funkzugangspunkte in dem Funknetz zweiter Art (12) .

2. Verfahren nach Anspruch 1, wobei die Situation ein Abschwächen von Signalstärke oder ein Verringern von Signalqualität von dem Funknetz erster Art (10) beinhaltet.

3. Verfahren nach einem der vorstehenden Ansprüche, wobei das Wechseln des Funkkommunikationsdiensts eine netzgelenkte Übergabe des UE (16) von dem Funknetz erster Art (10) zu dem ausgewählten der Funkzugangspunkte in dem Funknetz zweiter Art (12) ist.

4. Verfahren nach einem der vorstehenden Ansprüche, wobei die Scanparameter ferner angeben, welche spezifische Informationen das UE von dem Scannen erhalten und an das Funknetz erster Art (10) melden sollte.

5. Verfahren nach Anspruch 4, wobei die eine oder die mehreren Regeln eines oder mehrere des Folgenden definieren: eine Scanfrequenz des UE (16), einen Schwellenwert, der einen minimalen Signalparameter definiert, um das Scannen zu initiieren, ein Batterieniveau des UE (16), um das Scannen zu initiieren, einen Anwendungstyp auf dem UE (16), um das Scannen zu initiieren, ein Auslastungsniveau der Datenverarbeitungseinheit, einen Beschleunigungsmesserwert des UE (16), um das Scannen zu initiieren, eine Position des UE (16), um das Scannen zu initiieren, oder einen Mobilitätszustand des UE (16), um das Scannen zu initiieren.

6. Verfahren nach Anspruch 5, wobei die spezifischen Informationen eines oder mehrere des Folgenden beinhalten: eine Last eines oder mehrerer Funkzugangspunkte in dem Funknetz zweiter Art (12), einen oder mehrere unterstützende Roamingpartner, eine Art von Netzsicherheit, die durch das Funknetz zweiter Art (12) bereitgestellt wird, eine Funkverbindungsleistung, die mit dem einen oder den mehreren Funkzugangspunkten in dem Funknetz zweiter Art (12) assoziiert ist, oder eine Netzleistung von Backhaul-Transport des einen oder der mehreren Funkzugangspunkte in dem Funknetz zweiter Art (12) .

7. Verfahren, das durch einen Netzknoten (18) in einem Funknetz erster Art (10) durchgeführt wird, in dem ein Funkkommunikationsdienst mit dem Funknetz erster Art (10) durch ein Benutzergerät (UE) (16) eingerichtet ist, wobei das Verfahren Folgendes umfasst:
Senden (S10) an das UE (16) von Informationen, die Parameter beinhalten, die angeben, wie das UE (16) nach Funkzugangspunkten in einem Funknetz zweiter Art (12) scannen soll, das sich von dem Funknetz erster Art (10) unterscheidet, wobei das Funknetz erster Art (10) ein zelluläres Funknetz des Partnerschaftsprojekts der dritten Generation (3GPP) ist, wobei das Funknetz zweiter Art(12) ein drahtloses lokales Netzwerk (WLAN) ist und wobei die Informationen spezifische Bedingungen beinhalten, bei denen das UE (16) beginnen sollte, die Funkzugangspunkte zu scannen;
Empfangen (S12) von dem UE (16), von Funkzugangspunktdaten, die durch das UE (16) erkannt werden, das die Funkzugangspunkte in dem Funknetz zweiter Art (12) in Übereinstimmung mit den gesendeten Informationen scannt; und
Senden (S14) eines Signals an das UE (16), das das UE (16) anweist, den Funkkommunikationsdienst von dem Funknetz erster Art (10) zu einem ausgewählten einen der Funkzugangspunkte in dem Funknetz zweiter Art (12) zu wechseln, wobei der ausgewählte der Funkzugangspunkte in dem Funknetz zweiter Art (12) auf Grundlage der von dem UE (16) empfangenen Funkzugangspunktdaten ausgewählt wird.

8. Verfahren nach Anspruch 7, wobei das Wechseln eine netzgesteuerte Übergabe des UE (16) von dem Funknetz erster Art (10) zu dem ausgewählten einen der Funkzugangspunkte in dem Funknetz zweiter Art (12) ist.

9. Verfahren nach Anspruch 7, wobei die spezifischen Bedingungen ein Abschwächen von Signalstärke oder ein Verringern von Signalqualität von dem Funknetz erster Art beinhalten.

10. Verfahren nach Anspruch 9, wobei die spezifischen Bedingungen, bei denen das UE (16) beginnen sollte, die Funkzugangspunkte in dem Funknetz zweiter Art (12) zu scannen, eine oder mehrere Regeln beinhaltet, die eines oder mehrere des Folgenden beinhalten: eine Scanfrequenz des UE (16), einen Schwellenwert, der einen minimalen Signalparameter definiert, um das Scannen zu initiieren, ein Batterieniveau des UE (16), um das Scannen zu initiieren, einen Anwendungstyp auf dem UE (16), um das Scannen zu initiieren, ein Auslastungsniveau der Datenverarbeitungseinheit, einen Beschleunigungsmesserwert des UE (16), um das Scannen zu initiieren, eine Position des UE (16), um das Scannen zu initiieren, oder einen Mobilitätszustand des UE (16), um das Scannen zu initiieren, und wobei die empfangenen UE-Funkzugangspunktdaten eines oder mehrere des Folgenden beinhalten: eine Last eines oder mehrerer Funkzugangspunkte in dem Funknetz zweiter Art (12), einen oder mehrere unterstützende Roamingpartner, eine Art von Netzsicherheit, die durch das Funknetz zweiter Art (12) bereitgestellt wird, eine Funkverbindungsleistung, die mit dem einen oder den mehreren Funkzugangspunkten in dem Funknetz zweiter Art (12) assoziiert ist, oder eine Netzleistung von Backhaul-Transport des einen oder der mehreren Funkzugangspunkte in dem Funknetz zweiter Art (12).

11. Benutzergerät (UE) (16) zum Durchführen von Funkkommunikation, wobei das UE (16) Folgendes umfasst:
eine erste Funkschaltung (28), die dazu konfiguriert ist, einen Funkkommunikationsdienst mit einem Funknetz erster Art (10) einzurichten und von dem Funknetz erster Art (10) Informationen zu empfangen, die Parameter zum Scannen nach Funkzugangspunkten in einem Funknetz zweiter Art (12) beinhalten, das sich von dem Funknetz erster Art (10) unterscheidet, wobei das Funknetz erster Art (10) ein zelluläres Funknetz des Partnerschaftsprojekts der dritten Generation (3GPP) ist, wobei das Funknetz zweiter Art (12) ein drahtloses lokales Netzwerk (WLAN) ist und wobei die Scanparameter eine oder mehrere Regeln beinhalten, unter welcher Bedingung das UE (16) die Funkzugangspunkte scannen sollte;
eine zweite Funkschaltung (30), die dazu konfiguriert ist, mit dem Funknetz zweiter Art zu kommunizieren;
eine Steuerschaltung (22), die dazu konfiguriert ist, eine Situation zu erkennen, die angibt, dass das UE (16) die Funkzugangspunkte in dem Funknetz zweiter Art (12) scannen sollte, und wobei die Steuerschaltung (22) als Reaktion auf die erkannte Situation dazu konfiguriert ist, die zweite Funkschaltung (30) zu steuern, um die Funkzugangspunkte in dem Funknetz zweiter Art (12) auf Grundlage der empfangenen Informationen zu scannen, die Funkzugangspunktdaten zu erkennen und die erste Funkschaltung (28) zu steuern, die erkannten Funkzugangspunktdaten an das Funknetz erster Art (10) zu melden, wobei die erste Funkschaltung (28) dazu konfiguriert ist, ein Signal von dem Funknetz erster Art (10) zu empfangen, das das UE (16) anweist, den Funkkommunikationsdienst von dem Funknetz erster Art (10) zu einem ausgewählten einen der Funkzugangspunkte in dem Funknetz zweiter Art (12) zu wechseln, wobei der ausgewählte eine der Funkzugangspunkte in dem Funknetz zweiter Art (12) auf Grundlage der gemeldeten Funkzugangspunktdaten ausgewählt wird, und wobei die Steuerschaltung (22) als Reaktion auf das empfangene Signal dazu konfiguriert ist, den Funkkommunikationsdienst von dem Funknetz erster Art (10) zu dem ausgewählten der Funkzugangspunkte in dem Funknetz zweiter Art (12) zu wechseln.

12. UE (16) nach Anspruch 11, wobei die Scanparameter ferner angeben, welche spezifische Informationen das UE (16) von dem Scannen erhalten und das Funknetz erster Art (10) melden sollte, wobei die eine oder die mehreren Regeln eines oder mehrere des Folgenden definieren: eine Scanfrequenz des UE (16), einen Schwellenwert, der einen minimalen Signalparameter definiert, um das Scannen zu initiieren, ein Batterieniveau des UE (16), um das Scannen zu initiieren, einen Anwendungstyp auf dem UE (16), um das Scannen zu initiieren, ein Auslastungsniveau der Datenverarbeitungseinheit, einen Beschleunigungsmesserwert des UE (16), um das Scannen zu initiieren, eine Position des UE (16), um das Scannen zu initiieren, oder einen Mobilitätszustand des UE (16), um das Scannen zu initiieren, und
wobei die spezifischen Informationen eines oder mehrere des Folgenden beinhalten: eine Last eines oder mehrerer Funkzugangspunkte in dem Funknetz zweiter Art (12), einen oder mehrere unterstützende Roamingpartner, eine Art von Netzsicherheit, die durch das Funknetz zweiter Art (12) bereitgestellt wird, eine Funkverbindungsleistung, die mit dem einen oder den mehreren Funkzugangspunkten in dem Funknetz zweiter Art (12) assoziiert ist, oder eine Netzleistung von Backhaul-Transport des einen oder der mehreren Funkzugangspunkte in dem Funknetz zweiter Art (12).

13. Funkknoten (18) eines Funknetzes erster Art (10), in dem ein Funkkommunikationsdienst mit dem Funknetz erster Art (10) durch ein Benutzergerät (UE) (16) eingerichtet ist, wobei der Funkknoten (18) Folgendes umfasst:
eine Funknetzschnittstelle (34), die dazu konfiguriert ist, Informationen an das UE (16) zu senden oder gesendet zu haben, die Parameter beinhalten, die angeben, wie das UE (16) nach Funkzugangspunkten in einem Funknetz zweiter Art (12) scannen soll, das sich von dem Funknetz erster Art (10) unterscheidet, und von dem UE (16) Funkzugangspunktdaten zu empfangen, die durch das UE (16) erkannt werden, das die Funkzugangspunkte in dem Funknetz zweiter Art (12) in Übereinstimmung mit den gesendeten Informationen scannt, wobei das Funknetz erster Art (10) ein zelluläres Funknetz des Partnerschaftsprojekts der dritten Generation (3GPP) ist, wobei das Funknetz zweiter Art (12) ein drahtloses lokales Netzwerk (WLAN) ist und wobei die Informationen spezifische Bedingungen beinhalten, bei denen das UE (16) beginnen sollte, die Funkzugangspunkte zu scannen; und
eine Steuerschaltung (36), die dazu konfiguriert ist, ein Signal zu erzeugen, das das UE (16) anweist, den Funkkommunikationsdienst von dem Funknetz erster Art (10) zu einem ausgewählten der Funkzugangspunkte in dem Funknetz zweiter Art (12) zu wechseln, wobei der ausgewählte der Funkzugangspunkte in dem Funknetz zweiter Art (12) auf Grundlage der von dem UE (16) empfangenen Funkzugangspunktdaten ausgewählt wird, wobei die Steuerschaltung (36) dazu konfiguriert ist, die Funknetzschnittstelle (34) zu steuern, um das Signal zu senden.

14. Netzknoten (18) nach Anspruch 13, wobei die spezifischen Bedingungen, bei denen das UE (16) beginnen sollte, die Funkzugangspunkte in dem Funknetz zweiter Art (12) zu scannen, eines oder mehrere des Folgenden beinhalten: ein Abschwächen von Signalstärke oder ein Verringern von Signalqualität von dem Funknetz erster Art (10), eine Scanfrequenz des UE (16), einen Schwellenwert, der einen minimalen Signalparameter definiert, um das Scannen zu initiieren, ein Batterieniveau des UE (16), um das Scannen zu initiieren, einen Anwendungstyp auf dem UE (16), um das Scannen zu initiieren, ein Auslastungsniveau der Datenverarbeitungseinheit, einen Beschleunigungsmesserwert des UE (16), um das Scannen zu initiieren, eine Position des UE (16), um das Scannen zu initiieren, oder einen Mobilitätszustand des UE (16), um das Scannen zu initiieren.

15. Netzknoten (18) nach Anspruch 14, wobei die empfangenen UE-Funkzugangspunktdaten eines oder mehrere des Folgenden beinhalten: eine Last eines oder mehrerer Funkzugangspunkte in dem Funknetz zweiter Art (12), einen oder mehrere unterstützende Roamingpartner, eine Art von Netzsicherheit, die durch das Funknetz zweiter Art (12) bereitgestellt wird, eine Funkverbindungsleistung, die mit dem einen oder den mehreren Funkzugangspunkten in dem Funknetz zweiter Art (12) assoziiert ist, oder eine Netzleistung von Backhaul-Transport des einen oder der mehreren Funkzugangspunkte in dem Funknetz zweiter Art (12) .

## Revendications

1. Procédé exécuté par un équipement d'utilisateur, UE, (16), pour établir des communications radio, le procédé comprenant :
l'établissement (S1) d'un service de radiocommunication avec un premier type de réseau de radiocommunication (10) ;
la réception (S2), à partir du premier type de réseau de radiocommunication (10), d'informations comportant des paramètres pour balayer des points d'accès radio dans un second type de réseau de radiocommunication (12) différent du premier type de réseau de radiocommunication (10), dans lequel le premier type de réseau de radiocommunication (10) est un réseau de radiocommunication cellulaire de projet de partenariat de troisième génération, 3GPP, dans lequel le second type de réseau de radiocommunication (12) est un réseau local sans fil, WLAN, et dans lequel les paramètres de balayage comportent une ou plusieurs règles indiquant dans quelles conditions l'UE doit balayer les points d'accès radio ;
la détection d'une situation qui indique que l'UE (16) doit balayer les points d'accès radio dans le second type de réseau de radiocommunication (12) ;
en réponse à la situation détectée, le balayage (S3) des points d'accès radio dans le second type de réseau de radiocommunication (12) sur la base des informations reçues et la détection (S3) de données de point d'accès radio ;
le signalement (S4) des données de point d'accès radio détectées au premier type de réseau de radiocommunication (10) ;
la réception (S5) d'un signal à partir du premier type de réseau de radiocommunication (10), ordonnant à l'UE (16) de commuter le service de radiocommunication du premier type de réseau de radiocommunication (10) à un point sélectionné parmi les points d'accès radio dans le second type de réseau de radiocommunication (12), dans lequel le point sélectionné parmi les points d'accès radio dans le second type de réseau de radiocommunication (12) est sélectionné sur la base des données de point d'accès radio signalées ; et
en réponse (S6) au signal reçu, la commutation du service de radiocommunication du premier type de réseau de radiocommunication (10) au point sélectionné parmi les points d'accès radio dans le second type de réseau de radiocommunication (12).

2. Procédé selon la revendication 1, dans lequel la situation comporte un affaiblissement de l'intensité du signal ou une diminution de la qualité du signal à partir du premier type de réseau de radiocommunication (10).

3. Procédé selon l'une quelconque des revendications précédentes, dans lequel la commutation du service de radiocommunication est un transfert intercellulaire vers le réseau de l'UE (16) du premier type de réseau de radiocommunication (10) vers le point sélectionné parmi les points d'accès radio dans le second type de réseau de radiocommunication (12).

4. Procédé selon l'une quelconque des revendications précédentes, dans lequel les paramètres de balayage indiquent en outre les informations spécifiques que l'UE doit obtenir à partir du balayage et signaler au premier type de réseau de radiocommunication (10).

5. Procédé selon la revendication 4, dans lequel les une ou plusieurs règles définissent un ou plusieurs des éléments suivants : une fréquence de balayage par l'UE (16), un seuil définissant un paramètre de signal minimal pour initier le balayage, un niveau de batterie de l'UE (16) pour initier le balayage, un type d'application sur l' UE (16) pour initier le balayage, le niveau d'utilisation de l'unité de traitement de données, une valeur d'accéléromètre de l'UE (16) pour initier le balayage, une position de l'UE (16) pour initier le balayage ou un état de mobilité de l'UE (16) pour initier le balayage.

6. Procédé selon la revendication 5, dans lequel les informations spécifiques comportent un ou plusieurs des éléments suivants : une charge d'un ou de plusieurs points d'accès radio dans le second type de réseau de radiocommunication (12), un ou plusieurs partenaires d'itinérance pris en charge, un type de sécurité de réseau fourni par le second type de réseau de radiocommunication (12), une performance de liaison radio associée aux un ou plusieurs points d'accès radio dans le second type de réseau de radiocommunication (12), ou une performance de réseau de transport de liaison terrestre des un ou plusieurs points d'accès radio dans le second type de réseau de radiocommunication (12).

7. Procédé exécuté par un nœud de réseau (18) dans un premier type de réseau de radiocommunication (10) dans lequel un service de radiocommunication est établi avec le premier type de réseau de radiocommunication (10) par un équipement d'utilisateur, UE, (16), le procédé comprenant :
l'envoi (S10) à l'UE (16), d'informations comportant des paramètres indiquant comment l'UE (16) doit balayer des points d'accès radio dans un second type de réseau de radiocommunication (12) différent du premier type de réseau de radiocommunication (10), dans lequel le premier type de réseau de radiocommunication (10) est un réseau de radiocommunication cellulaire de projet de partenariat de troisième génération, 3GPP, dans lequel le second type de réseau de radiocommunication (12) est un réseau local sans fil, WLAN, et dans lequel les informations comportent des conditions spécifiques auxquelles l'UE (16) doit commencer le balayage des points d'accès radio ;
la réception (S12) à partir de l'UE (16), de données de point d'accès radio, détectées par l'UE (16) balayant les points d'accès radio dans le second type de réseau de radiocommunication (12) conformément aux informations envoyées ; et
l'envoi (S14) d'un signal à l'UE (16), ordonnant à l'UE (16) de commuter le service de radiocommunication du premier type de réseau de radiocommunication (10) à un point sélectionné parmi les points d'accès radio dans le second type de réseau de radiocommunication (12), dans lequel le point sélectionné parmi les points d'accès radio dans le second type de réseau de radiocommunication (12) est sélectionné sur la base des données de point d'accès radio reçues à partir de l'UE (16).

8. Procédé selon la revendication 7, dans lequel le commutateur est un transfert intercellulaire commandé par réseau de l'UE (16) du premier type de réseau de radiocommunication (10) vers le point sélectionné parmi les points d'accès radio dans le second type de réseau de radiocommunication (12).

9. Procédé selon la revendication 7, dans lequel les conditions spécifiques comportent un affaiblissement de l'intensité du signal ou une diminution de la qualité du signal à partir du premier type de réseau de radiocommunication.

10. Procédé selon la revendication 9, dans lequel les conditions spécifiques auxquelles l'UE (16) doit commencer à balayer les points d'accès radio dans le second type de réseau de radiocommunication (12) comportent une ou plusieurs règles qui définissent un ou plusieurs des éléments suivants : une fréquence de balayage par l'UE (16), un seuil définissant un paramètre de signal minimal pour initier le balayage, un niveau de batterie de l'UE (16) pour initier le balayage, un type d'application sur l' UE (16) pour initier le balayage, le niveau d'utilisation de l'unité de traitement de données, une valeur d'accéléromètre de l'UE (16) pour initier le balayage, une position de l'UE (16) pour initier le balayage ou un état de mobilité de l'UE (16) pour initier le balayage, et dans lequel les données de point d'accès radio de l'UE reçues comportent un ou plusieurs des éléments suivants : une charge d'un ou de plusieurs points d'accès radio dans le second type de réseau de radiocommunication (12), un ou plusieurs partenaires d'itinérance pris en charge, un type de sécurité de réseau fourni par le second type de réseau de radiocommunication (12), une performance de liaison radio associée aux un ou plusieurs points d'accès radio dans le second type de réseau de radiocommunication (12), ou une performance de réseau de transport de liaison terrestre des un ou plusieurs points d'accès radio dans le second type de réseau de radiocommunication (12).

11. Équipement d'utilisateur, UE, (16) pour établir des communications radio, l'UE (16) comprenant :
un premier circuit radio (28) configuré pour établir un service de radiocommunication avec un premier type de réseau de radiocommunication (10) et pour recevoir, à partir du premier type de réseau de radiocommunication (10), des informations comportant des paramètres pour balayer des points d'accès radio dans un second type de réseau de radiocommunication (12) différent du premier type de réseau de radiocommunication (10), dans lequel le premier type de réseau de radiocommunication (10) est un réseau de radiocommunication cellulaire de projet de partenariat de troisième génération, 3GPP, dans lequel le second type de réseau de radiocommunication (12) est un réseau local sans fil, WLAN, et dans lequel les paramètres de balayage comportent une ou plusieurs règles indiquant dans quelle condition l'UE (16) doit balayer les points d'accès radio ;
un second circuit radio (30) configuré pour communiquer avec le second type de réseau de radiocommunication ;
un circuit de commande (22) configuré pour détecter une situation qui indique que l'UE (16) doit balayer les points d'accès radio dans le second type de réseau de radiocommunication (12), et en réponse à la situation détectée, le circuit de commande (22) est configuré pour commander le second circuit radio (30) afin de balayer les points d'accès radio dans le second type de réseau de radiocommunication (12) sur la base des informations reçues, de détecter les données de point d'accès radio et de commander le premier circuit radio (28) pour signaler les données de point d'accès radio détectées au premier type de réseau de radiocommunication (10),
dans lequel le premier circuit radio (28) est configuré pour recevoir un signal à partir du premier type de réseau de radiocommunication (10), ordonnant à l'UE (16) de commuter le service de radiocommunication du premier type de réseau de radiocommunication (10) à un point d'accès sélectionné parmi les points d'accès radio dans le second type de réseau de radiocommunication (12), dans lequel le point sélectionné parmi les points d'accès radio dans le second type de réseau de radiocommunication (12) est sélectionné sur la base des données de point d'accès radio signalées, et en réponse au signal reçu, le circuit de commande (22) est configuré pour commuter le service de radiocommunication du premier type de réseau de radiocommunication (10) au point d'accès sélectionné parmi les points d'accès radio dans le second type de réseau de radiocommunication (12).

12. UE (16) selon la revendication 11, dans lequel les paramètres de balayage indiquent en outre les informations spécifiques que l'UE (16) doit obtenir du balayage et signaler au premier type de réseau de radiocommunication (10),
dans lequel les une ou plusieurs règles définissent un ou plusieurs des éléments suivants : une fréquence de balayage par l'UE (16), un seuil définissant un paramètre de signal minimal pour initier le balayage, un niveau de batterie de l'UE (16) pour initier le balayage, un type d'application sur l'UE (16) pour initier le balayage, le niveau d'utilisation de l'unité de traitement de données, une valeur d'accéléromètre de l'UE (16) pour initier le balayage, une position de l'UE (16) pour initier le balayage ou un état de mobilité de l'UE (16) pour initier le balayage, et
dans lequel les informations spécifiques comportent un ou plusieurs des éléments suivants : une charge d'un ou de plusieurs points d'accès radio dans le second type de réseau de radiocommunication (12), un ou plusieurs partenaires d'itinérance pris en charge, un type de sécurité de réseau fourni par le second type de réseau de radiocommunication (12), une performance de liaison radio associée aux un ou plusieurs points d'accès radio dans le second type de réseau de radiocommunication (12), ou une performance de réseau de transport de liaison terrestre des un ou plusieurs points d'accès radio dans le second type de réseau de radiocommunication (12).

13. Nœud de réseau (18) d'un premier type de réseau de radiocommunication (10) dans lequel un service de radiocommunication est établi avec le premier type de réseau de radiocommunication (10) par un équipement d'utilisateur, UE, (16), le nœud de réseau (18) comprenant:
une interface de réseau de radiocommunication (34) configurée pour envoyer ou avoir envoyé à l'UE (16) des informations comportant des paramètres indiquant comment l'UE (16) doit balayer des points d'accès radio dans un second type de réseau de radiocommunication (12) différent du premier type de réseau de radiocommunication (10) et pour recevoir à partir de l'UE (16) des données de point d'accès radio, détectées par l'UE (16) balayant les points d'accès radio dans le second type de réseau de radiocommunication (12) conformément aux informations envoyées, dans lequel le premier type de réseau de radiocommunication (10) est un réseau de radiocommunication cellulaire de projet de partenariat de troisième génération, 3GPP, dans lequel le second type de réseau de radiocommunication (12) est un réseau local sans fil, WLAN, et
dans lequel les informations comportent des conditions spécifiques auxquelles l'UE (16) doit commencer à balayer les points d'accès radio ; et
un circuit de commande (36) configuré pour générer un signal ordonnant à l'UE (16) de commuter le service de radiocommunication du premier type de réseau de radiocommunication (10) à un point sélectionné parmi les points d'accès radio dans le second type de réseau de radiocommunication (12), dans lequel le point sélectionné parmi les points d'accès radio dans le second type de réseau de radiocommunication (12) est sélectionné sur la base des données de point d'accès radio reçues à partir de l'UE (16), dans lequel le circuit de commande (36) est configuré pour commander l'interface de réseau de radiocommunication (34) afin d'envoyer le signal.

14. Nœud de réseau (18) selon la revendication 13, dans lequel les conditions spécifiques auxquelles l'UE (16) doit commencer à balayer les points d'accès radio dans le second type de réseau de radiocommunication (12) comportent un ou plusieurs des éléments suivants : un affaiblissement de l'intensité du signal ou une diminution de la qualité du signal à partir du premier type de réseau de radiocommunication (10), une fréquence de balayage par l'UE (16), un seuil définissant un paramètre de signal minimal pour initier le balayage, un niveau de batterie de l'UE (16) pour initier le balayage, un type d'application sur l' UE (16) pour initier le balayage, le niveau d'utilisation de l'unité de traitement de données, une valeur d'accéléromètre de l'UE (16) pour initier le balayage, une position de l'UE (16) pour initier le balayage ou un état de mobilité de l'UE (16) pour initier le balayage.

15. Nœud de réseau (18) selon la revendication 14, dans lequel les données de point d'accès radio de l'UE reçues comportent un ou plusieurs des éléments suivants : une charge d'un ou de plusieurs points d'accès radio dans le second type de réseau de radiocommunication (12), un ou plusieurs partenaires d'itinérance pris en charge, un type de sécurité de réseau fourni par le second type de réseau de radiocommunication (12), une performance de liaison radio associée aux un ou plusieurs points d'accès radio dans le second type de réseau de radiocommunication (12), ou une performance de réseau de transport de liaison terrestre des un ou plusieurs points d'accès radio dans le second type de réseau de radiocommunication (12).
